# EUROPÄISCHE PATENTANMELDUNG

(11) **EP 1 827 000 A1**
(43) Veröffentlichungstag der Anmeldung: **29.08.2007**
(21) Anmeldenummer: 07003022.6
(22) Anmeldetag: 13.02.2007
(51) Int. Cl.: H04M 3/56, H04L 12/18, H04L 29/06, H04M 1/253

(54) **Verfahren zur Herstellung einer Sprachverbindung zwischen Endgeräten sowie Endgerät und Telefonsystem zur Durchführung des Verfahrens**

(30) Priorität: 21.02.2006 DE 102006008013
(71) Anmelder: Vodafone Holding GmbH, 40213 Düsseldorf (DE)
(72) Erfinder: Alger, Michael, Dr.-Ing., 85540 Haar (DE)
(74) Vertreter: Müller, Thomas

(57) **Zusammenfassung**

Die Erfindung betrifft ein Verfahren zur Herstellung einer Sprachverbindung zwischen Endgeräten von zumindest zwei Teilnehmern (A, B), mit folgenden Schritten: Registrierung des zumindest einen ersten Teilnehmers (B) in einer Datenbank eines Voice-over-IP-Service-Anbieters; Empfang einer Rufanforderung zu dem zumindest einen ersten Teilnehmer (B) von einem zweiten Teilnehmer (A) in einem Knoten des Netzes des Voice-over-IP-Service-Anbieters; Parken der Rufanforderung durch den Voice-over-IP-Service-Anbieter; Erstellen einer Nachricht durch den Voice-over-IP-Service-Anbieter an den zumindest einen angerufenen ersten Teilnehmer (B) zur Aktivierung eines Software-Clients im Endgerät des zumindest einen ersten Teilnehmers (B); Senden der Nachricht zu dem Endgerät des zumindest einen ersten Teilnehmers (B); Empfangen einer Rufanforderung von dem zumindest einen ersten Teilnehmer (B) zu dem zweiten Teilnehmer (A) in dem Knoten des Netzes des Voice-over-IP-Service-Anbieters; Verbinden des zumindest einen ersten Teilnehmers (B) mit dem zweiten Teilnehmer (A) durch den Voice-over-IP-Service-Anbieter. Ferner betrifft die Erfindung ein Telefonsystem und ein Endgerät, welche zur Durchführung des erfindungsgemäßen Verfahrens geeignet sind.

## Beschreibung

Die vorliegende Erfindung betrifft ein Verfahren zur Herstellung einer Sprachverbindung, insbesondere einer Voice-over-IP-Sprachverbindung, zwischen Endgeräten von zumindest zwei Teilnehmern. Ferner betrifft die Erfindung ein Endgerät und ein Telefonsystem, welche zur Durchführung des erfindungsgemäßen Verfahrens ausgebildet sind.

Es ist bekannt Telefonkonferenzen in einem analogen oder einem digitalen Telefonnetz durchzuführen. Die Signalübertragung erfolgt bei einem analogen Telefonnetz kontinuierlich, während in einem digitalen Telefonnetz Signale in nur zwei möglichen Werten (0 und 1) dargestellt werden. Ein digitalen Telefonnetz ist beispielsweise das ISDN-Telefonnetz (ISDN = Integrated Services Digital Network) der Deutschen Telekom. Mit ISDN können Telefonate und Datenübertragungen für Bildtelefon, Fax, Datendienste, Dateitransfer, Vernetzungen, Telefonkonferenzen usw. abgewickelt werden. Es ist ferner bekannt Telefonkonferenzen in einem Mobilfunknetz bzw. in einem kombinierten Kommunikationsnetz, bestehend aus einem Festnetz und einem Mobilfunknetz, durchzuführen.

Ferner ist die Voice-over-IP-Telefonie bekannt. Voice-over-IP-Telefonie, auch IP-Telefonie oder Internet-Telefonie genannt, bezeichnet das Telefonieren über ein Netzwerk nach dem Internetprotokoll (IP). Die Telefonate werden dabei nicht über feste Telefonleitungen übermittelt, sondern als kleine Sprachpakete über das Internet zum Empfänger gesendet.

Mittels der Voice-over-IP-Telefonie kann sehr günstig mit Gesprächspartnern in der ganzen Welt telefoniert werden. Voraussetzung ist, dass die Gesprächspartner ebenfalls über ein Internet-Telefon oder die entsprechende Software verfügen. Bei der Voice-over-IP-Telefonie wird die Sprache digitalisiert und in einzelne IP-Pakete zerlegt. Durch "Internet-Telefon-Gateways" lässt sich das klassische Telefonnetz mit dem IP-Netz verbinden, so dass von Telefon zu Telefon über das Internet telefoniert werden kann. Die einzelnen Sprach-Pakete werden über Routersysteme zum Empfänger geleitet und dort über die entsprechende Hardware hörbar gemacht.

In der heutigen Zeit werden Telefonkonferenzen häufig mit mobilen Teilnehmern durchgeführt, da die entsprechenden Teilnehmer meist nur mobil, also über ein Mobiltelefon, einen PDA (Persönlicher Digitaler Assistent) oder ein Smartphone, erreichbar sind. Nachteilig hierbei ist, dass ein Telefongespräch zu einem mobilen Teilnehmer relativ teuer ist, da der Mobilfunkanbieter neben seiner eigenen Gebühr häufig ein Terminierungsentgelt bezieht. Die Gesamtsumme wird dem Nutzer der Telefonnetze in Rechnung gestellt. Unter dem Begriff Terminierungsentgelt versteht man das Entgelt, das Telefongesellschaften unter bestimmten Bedingungen einander zahlen. Das Terminierungsentgelt wird jeweils dann fällig, wenn der Teilnehmer, der den Anruf tätigt und der Teilnehmer, der angerufen wird, bei unterschiedlichen Telefongesellschaften sind und eine Quellnetztarifierung stattfindet. Das Terminierungsentgelt hängt von der Größe der Telefongesellschaft, die das Zielnetz führt, ab. Es ist daher in der Regel nicht in beiden Richtungen gleich hoch. Insbesondere bei Gesprächen in ausländische Mobilfunknetze fordern diese Betreiber von den Quellnetzbetreibern Terminierungsentgelte. Auch hier sind in der Regel die Entgelte nicht in beiden Richtungen gleich hoch. D.h., die Mobilfunknetzbetreiber verlangen Gebühren als Zutritt in ihre Netze. Die Terminierung eines Telefonats von einem Handy ins Festnetz kostet ebenfalls. Dadurch lassen sich auch die hohen Tarife der Festnetz- und Mobilfunkbetreiber in fremde Mobilfunknetze erklären, wohingegen Tarife im eigenen Netz relativ günstig sind.

Insbesondere eine Durchführung einer Telefonkonferenz ist für den bzw. die Nutzer teuer, da eine Vielzahl von Telefonverbindungen aufgebaut werden müssen. D.h., es ist für denjenigen teuer, der die Telefonkonferenz einberufen möchte, da die gewünschten Teilnehmer über das kostenpflichtige Mobilfunknetz angerufen werden müssen. Die Einberufung einer Telefonkonferenz mit Mobilfunkteilnehmern limitiert das Sparpotential der Voice-over-IP-Telefonie.

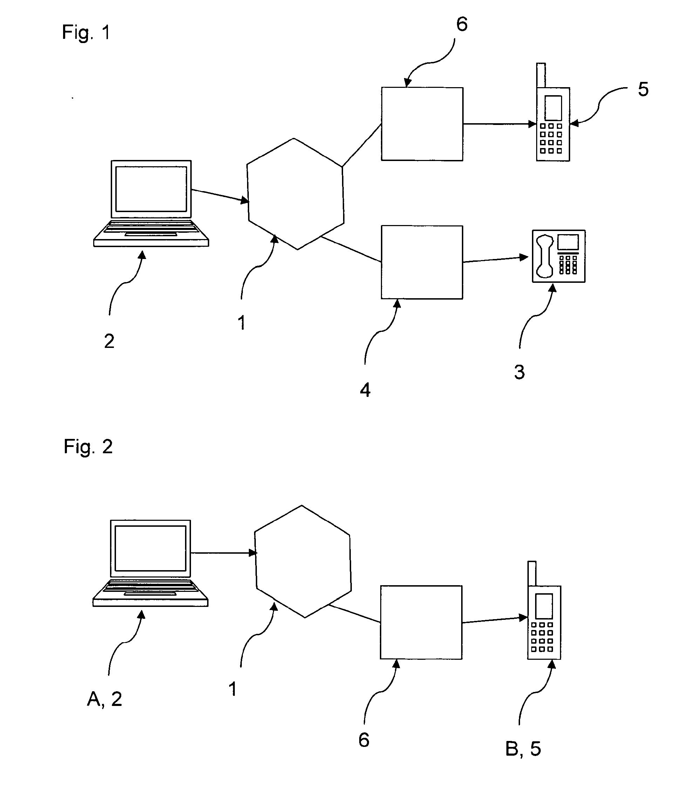

In der Fig. 1 ist schematisch die aus heutiger Sicht bekannte Möglichkeit zur Durchführung einer Telefonkonferenz unter Nutzung der Voice-over-IP-Telefonie dargestellt. Der beim einem der Voice-over-IP-Service-Anbieter 1 registrierte Kunde nutzt seinen Computer 2, um über seinen Internetzugang Telefonate zu initiieren. Ruft er Teilnehmer des gleichen Voice-over-IP-Service-Anbieters an, so zahlt er keine Gebühren. Auch für internationale Gespräche fallen keine Gebühren an. Ruft er einen Festnetzteilnehmer 3 an, z.B. von USA nach Deutschland, so zahlt der Kunde nur die örtlichen Festnetzgebühren, da der Anruf von den USA nach Deutschland über das Internet transportiert wird und erst in Deutschland in das analoge Telefonnetz 4, auch PSTN (Public Switched Telephone Network) genannt, übergeben wird. Nutzt der Kunde ein Mobilfunknetz 6, d.h., ruft er einen Mobilfunkteilnehmer 5 an, so sind die Kosten wesentlich höher, da das gebührenpflichtige Netz eines Mobilfunkanbieters genutzt wird. Hier fallen dann auch Terminierungsentgelte an. In jedem Fall sind die Kosten für eine Telefonkonferenz zwischen mehreren Teilnehmern hoch, da zur Verbindung eines Anrufers mit mehreren Teilnehmern eine Vielzahl von Gebühren in analogen Telefonnetzen 4 oder in Mobilfunknetzen 6 fällig werden.

Aufgabe der vorliegenden Erfindung ist es, ein Verfahren, ein Endgerät und ein Telefonsystem zu schaffen, durch welche(s) auf einfache und kostengünstige Art und Weise eine Sprachverbindung zwischen Endgeräten von zumindest zwei Teilnehmern hergestellt werden kann. Insbesondere soll die Sprachverbindung zwischen den Teilnehmern ohne die Nutzung eines Festnetztelefongespräches zur Herstellung einer Telefonkonferenz aufgebaut werden können.

Die Aufgabe wird daher erfindungsgemäß durch ein Verfahren zur Herstellung einer Sprachverbindung zwischen Endgeräten von zumindest zwei Teilnehmern gemäß Patentanspruch 1, durch ein Endgerät gemäß Patentanspruch 8 sowie durch ein Telefonsystem gemäß Patentanspruch 9 gelöst. Weitere Ausgestaltungen der Erfindung ergeben sich aus den abhängigen Patentansprüchen. Merkmale und Details, die im Zusammenhang mit dem erfindungsgemäßen Verfahren beschrieben sind, gelten dabei selbstverständlich, soweit anwendbar, auch im Zusammenhang mit dem erfindungsgemäßen Telefonsystem und dem erfindungsgemäßen Endgerät und jeweils umgekehrt.

Ein Verfahren zur Herstellung einer Sprachverbindung zwischen Endgeräten von zumindest zwei Teilnehmern, mit folgenden Schritten: Registrierung des zumindest einen ersten Teilnehmers in einer Datenbank eines Voice-over-IP-Service-Anbieters; Empfang einer Rufanforderung zu dem zumindest einen ersten Teilnehmer von einem zweiten Teilnehmer in einem Knoten des Netzes des Voice-over-IP-Service-Anbieters; Parken der Rufanforderung durch den Voice-over-IP-Service-Anbieter; Erstellen einer Nachricht durch den Voice-over-IP-Service-Anbieter an den zumindest einen angerufenen ersten Teilnehmer zur Aktivierung eines Software-Clients im Endgerät des zumindest einen ersten Teilnehmers; Senden der Nachricht zu dem Endgerät des zumindest einen ersten Teilnehmers; Empfangen einer Rufanforderung von dem zumindest einen ersten Teilnehmer zu dem zweiten Teilnehmer in dem Knoten des Netzes des Voice-over-IP-Service-Anbieters; Verbinden des zumindest einen ersten Teilnehmers mit dem zweiten Teilnehmer durch den Voice-over-IP-Service-Anbieter, stellt ein Verfahren dar, durch das auf einfache und kostengünstige Art und Weise eine Sprachverbindung zwischen Endgeräten von zumindest zwei Teilnehmern hergestellt werden kann.

Besonders bevorzugt ist dieses Verfahren zur Herstellung einer Sprachverbindung, wenn zumindest das Endgerät des zweiten Teilnehmers ein mobiles Endgerät ist. Das mobile Endgerät kann beispielsweise ein Mobiltelefon, ein PDA (Persönlicher Digitaler Assistent), ein Smartphone oder ein tragbarer Computer sein.

In einem ersten Schritt wird der zumindest eine erste Teilnehmer in einer Datenbank eines Voice-over-IP-Service-Anbieters registriert. Der zweite Teilnehmer, der die Einberufung einer Telefonkonferenz initiiert kann ebenfalls in der Datenbank des Voice-over-IP-Service-Anbieters registriert werden. Idealerweise sind eine Vielzahl von Teilnehmern in der Datenbank des Voice-over-IP-Service-Anbieters registriert, so dass diese von einem Initiator der Telefonkonferenz leicht erreicht werden können. So ist es vorteilhaft, wenn mehrere Teilnehmer als Gruppe in der Datenbank eines Voice-over-IP-Service-Anbieters registriert werden. Ein Teilnehmer kann dabei in mehreren Gruppen registriert sein. Je nach gewünschten Teilnehmern zu einer Telefonkonferenz kann der Initiator der Telefonkonferenz bestimmen welche Gruppe von Teilnehmern er auswählt.

In einem zweiten Schritt wird die Rufanforderung für die Einberufung der Telefonkonferenz von dem zweiten Teilnehmer zu dem zumindest einen ersten Teilnehmer in einem Knoten des Netzes des Voice-over-IP-Service-Anbieters empfangen. Der Voice-over-IP-Service-Anbieter parkt dann die Rufanforderung. Dies bedeutet, dass die Rufanforderung für die Einberufung der Telefonkonferenz zunächst einmal aufrecht gehalten wird.

In einem weiteren Schritt erstellt der Voice-over-IP-Service-Anbieter eine Nachricht an den zumindest einen angerufenen ersten Teilnehmer zur Aktivierung eines Software-Clients im Endgerät des zumindest einen ersten Teilnehmers. D.h., die Nachricht des Voice-over-IP-Service-Anbieters beinhaltet Signale, die eine Aktivierung des Software-Clients im Endgerät des zumindest einen ersten Teilnehmers nach sich zieht. Aktivierung bedeutet, dass der Software-Client nach Empfang der Nachricht des Voice-over-IP-Service-Anbieters automatisch eine Rufanforderung zu dem zweiten Teilnehmer initiiert.

In einem folgenden Schritt wird diese Rufanforderung von dem zumindest einen ersten Teilnehmer zu dem zweiten Teilnehmer in dem Knoten des Netzes des Voice-over-IP-Service-Anbieters empfangen. D.h., der zumindest eine erste Teilnehmer sendet eine Rufanforderung an den zweiten Teilnehmer an den Voice-over-IP-Service-Anbieter. Hierzu nutzt der zumindest eine erste Teilnehmer bevorzugt die Internet-Telefonie. Dadurch, dass der zumindest eine erste Teilnehmer durch die vom dem Voice-over-IP-Service-Anbieter gesandte Nachricht über eine Rufanforderung eines zweiten Teilnehmers informiert wurde, kann er nun über eine kostengünstige Voice-over-IP-Sprachverbindung selbst den Verbindungsaufbau zu dem Voice-over-IP-Service-Anbieter aufbauen. Der Voice-over-IP-Service-Anbieter registriert die Rufanforderung des oder der weiteren ersten Teilnehmer(s), den so genannten Rückruf, und verbindet den oder die Teilnehmer mit dem zweiten Teilnehmer. D.h., der Voice-over-IP-Service-Anbieter verbindet die Rufanforderung des oder der weiteren ersten Teilnehmer(s) mit der in dem Knoten des Netzes des Voice-over-IP-Service-Anbieters geparkten Rufanforderung des zweiten Teilnehmers, d.h. des Initiators der Telefonkonferenz.

Durch dieses Verfahren kann auf einfache und kostengünstige Art und Weise eine Sprachverbindung zwischen Endgeräten von zumindest zwei Teilnehmern hergestellt werden, ohne dass Terminierungsentgelte von Mobilfunkanbietern fällig werden. Die einberufene Telefonkonferenz wird insbesondere über Voice-over-IP geführt und ist somit sehr kostengünstig. Durch das erfindungsgemäße Verfahren Ferner kann die kostenintensive Nutzung eines Mobilfunknetzes umgangen werden.

Bevorzugt ist ferner ein Verfahren zur Herstellung einer Sprachverbindung, bei dem die Nachricht des Voice-over-IP-Service-Anbieters per WAP-Push oder durch eine Kurznachricht (Short Message) an das mobile Endgerät zumindest eines weiteren ersten Teilnehmers gesendet wird. Die Nachricht kann zum einen per SMS an das mobile Endgerät des zumindest eines weiteren Teilnehmers gesendet werden. Vorteilhafter ist aber die Verwendung von WAP. Durch WAP (WAP = Wireless Application Protocol) werden Inhalte des Internets speziell für die Mobilfunknetze dargestellt. WAP ist in diesem Sinne kein eigenständiges Kommunikationsprotokoll, sondern eine Sammlung von Technologien, deren Zielsetzung ist, Internetinhalte für die langsame Übertragungsrate und die kleinen Displays der Handys verfügbar zu machen. WAP bedeutet kurze Texte auf kleinen Displays darzustellen. Der entscheidende Vorteil von WAP gegenüber SMS ist die Interaktivität. Der WAP-Standard unterstützt den Push-Service, der es erlaubt, Nachrichten ohne Anforderung an ein mobiles Endgerät zu senden. Der Voice-over-IP-Service-Anbieter kann somit die Nachricht einfach und kostengünstig per WAP-Push an das mobile Endgerät des zumindest eines weiteren Teilnehmers senden. In dem mobilen Endgerät des zumindest eines weiteren Teilnehmers wird nach Empfang der Nachricht der Software-Client des mobilen Endgerätes des zumindest eines weiteren Teilnehmers aktiviert, so dass automatisch eine Rufanforderung an den zweiten Teilnehmer zu dem Konten des Netzes des Voice-over-IP-Service-Anbieters gesendet wird.

Vorteilhaft ist ein Verfahren zur Herstellung einer Sprachverbindung, bei dem die Nachricht des Voice-over-IP-Service-Anbieters Details über die Rufanforderung des Teilnehmers und/oder über den Teilnehmer enthält. Details bedeuten im Sinne der vorliegenden Erfindung nähere Informationen über die Rufanforderung oder den Initiator der Rufanforderung. Dies kann beispielsweise der Name oder die Telefonnummer des Initiators der Rufanforderung oder der Name der Gruppe der Teilnehmer, die zur Telefonkonferenz eingeladen werden sollen, sein. Ein Verfahren zur Herstellung einer Sprachverbindung, bei dem das Endgerät des zumindest einen ersten Teilnehmers nach dem Empfang der Nachricht des Voice-over-IP-Service-Anbieters diese indiziert und/oder eine Identifikation des der Rufanforderung zugeordneten zweiten Teilnehmers durchführt, ist besonders vorteilhaft. Hierdurch sieht der Angerufene sofort, wer eine Telefonkonferenz einberuft.

Ferner ist ein Verfahren zur Herstellung einer Sprachverbindung vorteilhaft, bei dem die Rufanforderung von dem zumindest einen ersten Teilnehmer zu dem zweiten Teilnehmer eine Identifikation des zumindest einen ersten Teilnehmer aufweist. Hierdurch kann dem Voice-over-IP-Service-Anbieter oder dem zweitem Teilnehmer, d.h. dem Initiator der Telefonkonferenz, angezeigt werden, dass der angerufene erste Teilnehmer der Telefonkonferenz beitritt. Ferner kann dem Voice-over-IP-Service-Anbieter oder dem zweitem Teilnehmer durch die Identifikation angezeigt werden, welcher der angerufenen Teilnehmer zurückruft.

Ferner ist ein Verfahren zur Herstellung einer Sprachverbindung bevorzugt, bei dem die Rufanforderung von dem zumindest einen ersten Teilnehmer zu dem zweiten Teilnehmer eine Indikation über eine netzinterne Rufanforderung aufweist. Hierdurch kann der Initiator der Telefonkonferenz sehen, dass es sich bei der Rufanforderung des zumindest einen ersten Teilnehmers um eine kostenfreie netzinterne Voice-over-IP-Sprachverbindung handelt.

Ein Verfahren zur Herstellung einer Sprachverbindung zwischen zwei Teilnehmern, bei dem das Endgerät, insbesondere das mobile Endgerät, des zumindest einen ersten Teilnehmers eine Signalisierung der Durchverbindung des zweiten Teilnehmers empfängt, ist besonders vorteilhaft, da der zumindest eine erste Teilnehmer hierdurch erfährt, ab wann er der Telefonkonferenz beiwohnt.

Besonders bevorzugt ist ein Verfahren zur Herstellung einer erfindungsgemäßen Sprachverbindung, bei dem in einem Zwischenschritt überprüft wird, ob sich das Endgerät, insbesondere das mobile Endgerät, des zumindest einen weiteren Teilnehmers in einem Calling-Party-Pays-Land aufhält. Hierdurch kann der zweite Teilnehmer, d.h. der Initiator der Telefonkonferenz, entscheiden, ob er den zumindest einen ersten Teilnehmer zu einer Telefonkonferenz einladen soll, oder nicht. Ferner kann der zweite Teilnehmer entscheiden, ob er den zumindest einen ersten Teilnehmer eine Rufanforderung senden soll, oder nicht. Wird festgestellt, dass sich der zumindest eine erste Teilnehmer in einem Calling-Party-Pays-Land aufhält, so kann der Initiator der Telefonkonferenz den zumindest einen ersten Teilnehmer direkt anrufen, da er als Anrufer die Telefongebühren übernimmt. Wenn keine Terminierungsentgelte anfallen, kann es sein, dass sich die Kosten relativ gering halten, so dass der Initiator der Telefonkonferenz sich entscheiden kann den ersten Teilnehmer direkt anzurufen, anstatt ihm eine Rufanforderung zuzusenden. Calling-Party-Pays-Land sind solche Länder oder Regionen in den keine Telefongebühren für den Angerufenen anfallen. Hierdurch sind die Gebühren für den Anrufer relativ günstig, so dass er die Wahl hat zwischen dem Senden einer Rufanforderung an den gewünschten Telefonpartner oder einem direkten Aufbau des Telefongesprächs.

Vorteilhaft ist des Weiteren ein Verfahren zur Herstellung einer Sprachverbindung zwischen zumindest zwei Teilnehmers, bei dem die Rufanforderung des Teilnehmers von dem Voice-over-IP-Service-Anbieter direkt an das Endgerät, insbesondere das mobile Endgerät, des zumindest einen weiteren Teilnehmers durchgestellt wird, wenn sich das Endgerät, insbesondere das mobile Endgerät, des zumindest einen weiteren Teilnehmers in einem Calling-Party-Pays-Land aufhält. D.h., der zumindest eine weitere Teilnehmer wird automatisch von dem zweiten Teilnehmer angerufen, wenn festgestellt wird, dass sich das mobile Endgerät des zumindest einen weiteren Teilnehmers in einem Calling-Party-Pays-Land aufhält.

Besonders bevorzugt ist ein erfinderisches Verfahren zur Herstellung einer Sprachverbindung, bei dem die Sprachverbindung eine Voice-over-IP-Sprachverbindung ist. Hierdurch sind die Gebühren frei oder zumindest sehr gering, wenn eine Sprachverbindung zwischen zumindest zwei Teilnehmern aufgebaut wird. Insbesondere Telefonkonferenzen mit einer Vielzahl von Teilnehmern können dadurch sehr kostengünstig gestaltet werden.

Die Aufgabe wird ferner durch ein Endgerät, insbesondere durch ein mobiles Endgerät, welches zur Durchführung des zuvor beschriebenen Verfahrens, d.h. zur Herstellung einer Sprachverbindung zwischen Endgeräten von zumindest zwei Teilnehmern (A, B), ausgebildet ist, gelöst.

Besonders bevorzugt ist ein Endgerät, dass als tragbarer Computer, als Mobiltelefon, als Personal Digital Assistent oder als Smartphone ausgebildet ist, und das einen Software-Client zum Senden und/oder Empfangen von Nachrichten aufweist.

Die Aufgabe wird ferner durch ein Telefonsystem zur Verbindung von zumindest zwei Endgeräten, insbesondere zwei mobile Endgeräten, gelöst, wobei das Telefonsystem zur Durchführung des zuvor beschriebenen erfindungsgemäßen Verfahrens zur Herstellung einer Sprachverbindung zwischen den zumindest zwei Teilnehmern ausgebildet ist. Das Telefonsystem weist zur Durchführung des Verfahrens vorteilhafterweise zumindest einen Voice-over-IP-Service-Anbieter und das zumindest eine Endgerät des ersten Teilnehmers zumindest einen Software-Client auf.

Insbesondere ein Telefonsystem, bei dem der Voice-over-IP-Service-Anbieter ein Gateway zur Verbindung der Rufanforderung des Endgeräts des Teilnehmers mit einem Endgerät zumindest eines weiteren Teilnehmers aufweist, eignet sich besonders gut, um ein analoges oder digitales Telefonnetz mit dem Internet zu verbinden. Durch das Gateway lässt sich das klassische Telefonnetz mit dem IP-Netz verbinden, so dass von Telefon zu Telefon über das Internet telefoniert werden kann. Die einzelnen Sprach-Pakete werden über Routersysteme zum Empfänger geleitet und dort über die entsprechende Hardware hörbar gemacht.

Bevorzugt ist ferner ein Telefonsystem, bei dem die Endgeräte des ersten Teilnehmers und des zumindest einen weiteren Teilnehmers ein tragbarer Computer, ein Mobiltelefon, ein PDA (Personaler Digitaler Assistent) und/oder ein Smart-Telefon sind. Tragbare Computer, insbesondere Notebooks, können mit Kopfhörern und Mikrofonen zu einem Telefon aufgerüstet werden. D.h., ein mobiles Endgerät das als tragbarer Computer, als Mobiltelefon, als Personal Digital Assistent oder als Smartphone ausgebildet ist, und das einen Software-Client zum Senden und/oder Empfangen von Nachrichten aufweist, ist besonders geeignet zur Durchführung des erfindungsgemäßen Verfahrens zur Herstellung einer Sprachverbindung zwischen Endgeräten von zumindest zwei Teilnehmern.

Die Erfindung wird nachfolgend anhand eines Ausführungsbeispiels unter Bezugnahme auf die beiliegenden Zeichnungen näher erläutert. Es zeigen:
- Figur 1: eine schematische Darstellung einer bekannten Telefonkonferenz unter Nutzung von Voice-over-IP;
- Figur 2: eine schematische Darstellung der erfindungsgemäßen Telefonkonferenz unter Nutzung von Voice-over-IP.

In Figur 2 ist schematisch eine erfindungsgemäße Möglichkeit zur Durchführung einer Telefonkonferenz unter Nutzung der Voice-over-IP-Telefonie dargestellt. Bei dem Voice-over-IP-Service-Anbieter 1 kann ein erster Teilnehmer B oder eine Vielzahl von ersten Teilnehmern B registriert werden. Der erste Teilnehmer B stellt in diesem Fall ein Mobilfunkteilnehmer 5 dar. Der Voice-over-IP-Service-Anbieter 1 speichert die ersten Teilnehmern B oder die Gruppen mit einer Vielzahl von ersten Teilnehmern B in einer Datenbank. Ein Anrufer, hier der zweite Teilnehmer A, initiiert einen Anruf an den ersten Teilnehmer B mit der Aufforderung zu einer Telefonkonferenz. Diese Rufanforderung des zweiten Teilnehmers A an den ersten Teilnehmer B wird in einem in einem Knoten des Netzes des Voice-over-IP-Service-Anbieters 1 empfangen. Der Voice-over-IP-Service-Anbieter 1 parkt die Rufanforderung. D.h., die Leitung der Rufanforderung wird zunächst aufrechterhalten. Der Voice-over-IP-Service-Anbieter 1 erstellt eine Nachricht für den angerufenen ersten Teilnehmer B zur Aktivierung eines Software-Clients im mobilen Endgerät 5 des ersten Teilnehmers B. Nach Erstellen der Nachricht sendet der Voice-over-IP-Service-Anbieter 1 diese zu dem mobilen Endgerät des ersten Teilnehmers B. Diese Nachricht wird bevorzugt durch einen so genannten WAP-Push an das mobile Endgerät des ersten Teilnehmers B gesendet. In der Nachricht werden Details der Telefonkonferenz, beispielsweise der Name des Anrufers oder die anderen Teilnehmer, mitgeteilt. Die Nachricht beinhaltet Signale, die den Software-Client im mobilen Endgerät 5 des ersten Teilnehmers B automatisch aktivieren seinerseits eine Rufanforderung zu dem zweiten Teilnehmer A an den Voice-over-IP-Service-Anbieter 1 zu senden. Nach dem Empfangen dieser Rufanforderung von dem ersten Teilnehmer B zu dem zweiten Teilnehmer A in dem Knoten des Netzes des Voice-over-IP-Service-Anbieters 1 verbindet der Voice-over-IP-Service-Anbieter 1 die geparkte Rufanforderung des zweiten Teilnehmers A mit der Rufanforderung des ersten Teilnehmers B, so dass eine Sprachverbindung zwischen beiden aufgebaut ist. Hierdurch sind beide Teilnehmer A und B durch selbst initiierte Anrufe miteinander verbunden, wodurch die Telefonkosten reduziert werden können im Vergleich zu angenommenen Anrufen.

Durch das erfindungsgemäße Verfahren entsteht eine Sprachverbindung zwischen zumindest zwei Teilnehmern A, B, bevorzugt eine Telefonkonferenz zwischen einer Vielzahl von Teilnehmern, bei der alle Teilnehmer A, B um an der Sprachverbindung bzw. an der Telefonkonferenz teilzunehmen den Gesprächsaufbau selbst generiert haben. D.h., es existieren im Idealfall nur selbst initiierte Anrufe, so genannte mobile originated calls, die günstiger sind, als angenommene Anrufe, so genannte terminated calls.

Der zweite Teilnehmer A kann über ein mobiles Endgerät 2, hier ein Notebook, die Rufanforderung an den Voice-over-IP-Service-Anbieter 1 senden. Das mobile Endgerät 5 des zumindest einen ersten Teilnehmers B kann ein tragbarer Computer, ein Notebook, ein Smartphone, ein PDA oder bevorzugt ein Mobiltelefon sein. Auf dem mobilen Endgerät 5 des zumindest einen ersten Teilnehmers B ist der Software-Client installiert, der nach Empfang der Nachricht des Voice-over-IP-Service-Anbieters 1 automatisch eine Rufanforderung zurücksendet, um eine Sprachverbindung mit der Rufanforderung des zweiten Teilnehmers A, dem Initiator der Sprachverbindung, einzugehen. Die Verbindung beider Rufanforderungen erfolgt durch den Voice-over-IP-Service-Anbieter 1, d.h. in einem Knoten des Netzes des Voice-over-IP-Service-Anbieters 1.

Eine Ausführungsform des erfindungsgemäßen Verfahrens kann vorsehen, dass die Rufanforderungen der ersten Teilnehmer B in dem Knoten des Netzes des Voice-over-IP-Service-Anbieters 1 solange geparkt werden, bis alle Rufanforderung dort eingegangen sind. Erst nach Eingang aller Rufanforderung der ersten Teilnehmer B werden diese mit der geparkten Rufanforderung des zweiten Teilnehmers A verbunden. Nach dem Verbinden der Rufanordnungen erhalten der zweite Teilnehmer und die ersten Teilnehmer B jeweils eine Nachricht, dass die Sprachverbindung besteht.

Als Voice-over-IP-Service-Anbieter 1 dienen beispielsweise Anbieter, wie Sipgate oder Skype.

### Bezugszeichenliste

- A: zweiter Teilnehmer (Initiator der Sprachverbindung)
- B: erster Teilnehmer
- 1: Voice-over-IP-Service-Anbieter
- 2: mobiles Endgerät des zweiten Teilnehmers
- 3: Festnetzteilnehmer
- 4: Analoges Telefonnetz
- 5: mobilen Endgerät des ersten Teilnehmers
- 6: Mobilfunknetz

## Patentansprüche

1. Verfahren zur Herstellung einer Sprachverbindung, insbesondere einer Voice-over-IP-Sprachverbindung, zwischen Endgeräten von zumindest zwei Teilnehmern (A, B), mit folgenden Schritten:
Registrierung des zumindest einen ersten Teilnehmers (B) in einer Datenbank eines Voice-over-IP-Service-Anbieters;
Empfang einer Rufanforderung zu dem zumindest einen ersten Teilnehmer (B) von einem zweiten Teilnehmer (A) in einem Knoten des Netzes des Voice-over-IP-Service-Anbieters;
Parken der Rufanforderung durch den Voice-over-IP-Service-Anbieter;
Erstellen einer Nachricht durch den Voice-over-IP-Service-Anbieter an den zumindest einen angerufenen ersten Teilnehmer (B) zur Aktivierung eines Software-Clients im Endgerät des zumindest einen ersten Teilnehmers (B); Senden der Nachricht zu dem Endgerät des zumindest einen ersten Teilnehmers (B);
Empfangen einer Rufanforderung von dem zumindest einen ersten Teilnehmer (B) zu dem zweiten Teilnehmer (A) in dem Knoten des Netzes des Voice-over-IP-Service-Anbieters;
Verbinden des zumindest einen ersten Teilnehmers (B) mit dem zweiten Teilnehmer (A) durch den Voice-over-IP-Service-Anbieter.

2. Verfahren zur Herstellung einer Sprachverbindung gemäß Anspruch 1, **dadurch gekennzeichnet, dass** die Nachricht des Voice-over-IP-Service-Anbieters per WAP-Push oder durch eine Kurznachricht (Short Message) an das Endgerät zumindest eines weiteren Teilnehmers (B) gesendet wird.

3. Verfahren zur Herstellung einer Sprachverbindung gemäß Anspruch 1 oder 2, **dadurch gekennzeichnet, dass** die Nachricht des Voice-over-IP-Service-Anbieters Details über die Rufanforderung des Teilnehmers (A) und/oder über den Teilnehmer (A) enthält.

4. Verfahren zur Herstellung einer Sprachverbindung gemäß Anspruch 1 bis 3, **dadurch gekennzeichnet, dass** das Endgerät des zumindest einen ersten Teilnehmers (B) nach dem Empfang der Nachricht des Voice-over-IP-Service-Anbieters diese indiziert und/oder eine Identifikation des der Rufanforderung zugeordneten zweiten Teilnehmers (A) durchführt.

5. Verfahren zur Herstellung einer Sprachverbindung gemäß Anspruch 1 bis 4, **dadurch gekennzeichnet, dass** die Rufanforderung von dem zumindest einen ersten Teilnehmer (B) zu dem zweiten Teilnehmer (A) eine Identifikation des zumindest einen ersten Teilnehmer (B) oder eine Indikation über eine netzinterne Rufanforderung aufweist.

6. Verfahren zur Herstellung einer Sprachverbindung gemäß Anspruch 1 bis 5, **dadurch gekennzeichnet, dass** in einem Zwischenschritt überprüft wird, ob sich das Endgerät des zumindest einen weiteren Teilnehmers (B) in einem Calling-Party-Pays-Land aufhält.

7. Verfahren zur Herstellung einer Sprachverbindung gemäß Anspruch 6, **dadurch gekennzeichnet, dass** die Rufanforderung des Teilnehmers (A) von dem Voice-over-IP-Service-Anbieter direkt an das Endgerät des zumindest einen weiteren Teilnehmers (B) durchgestellt wird, wenn sich das Endgerät des zumindest einen weiteren Teilnehmers (B) in einem Calling-Party-Pays-Land aufhält.

8. Endgerät, insbesondere mobiles Endgerät, **dadurch gekennzeichnet, dass** es zur Durchführung des Verfahren zur Herstellung einer Sprachverbindung zwischen Endgeräten von zumindest zwei Teilnehmern (A, B) gemäß einem der Ansprüche 1 bis 7 ausgebildet ist, wobei das Endgerät als tragbarer Computer, als Mobiltelefon, als Personal Digital Assistent oder als Smartphone ausgebildet ist und das Endgerät einen Software-Client zum Senden und/oder Empfangen von Nachrichten aufweist.

9. Telefonsystem zur Verbindung von zumindest zwei Endgeräten von zumindest zwei Teilnehmern (A, B), **dadurch gekennzeichnet, dass** das Telefonsystem zur Durchführung eines Verfahrens zur Herstellung einer Sprachverbindung gemäß einem der vorherigen Ansprüche 1 bis 7 ausgebildet ist, wobei die Endgeräte des Teilnehmers (A) und des zumindest einen weiteren Teilnehmers (B) ein tragbarer Computer, ein Mobiltelefon, ein PDA (Personaler Digitaler Assistent) und/oder ein Smart-Telefon sind.

10. Telefonsystem gemäß Anspruch 9, **dadurch gekennzeichnet, dass** das Telefonsystem zumindest einen Voice-over-IP-Service-Anbieter aufweist, der wenigstens ein Speichermittel verwendet und der ein Gateway zur Verbindung der Rufanforderung des Endgeräts des Teilnehmers (A) mit einem Endgerät zumindest eines weiteren Teilnehmers (B) aufweist, und dass zumindest das Endgerät des ersten Teilnehmers (B) einen Software-Client aufweist.
